# EUROPEAN PATENT APPLICATION

(11) **EP 1 985 486 A1**
(43) Date of publication of application: **29.10.2008**
(21) Application number: 08033509.4
(22) Date of filing: 31.01.2008
(51) Int. Cl.: B60J 11/00

(54) **A portable automatic car cover**

(30) Priority: 26.04.2007 GB 0708039
(71) Applicant: Hernandez Quijada, Guillermo, St Oven Jersey JE3 2WF Jersey (GB)
(72) Inventor: Hernandez Quijada, Guillermo, St Oven Jersey JE3 2WF Jersey (GB)

(57) **Abstract**

It is an independent, portable mechanism with the suitable structure to manipulate a series of canvases or covers (1, 4) that by means of a mechanized system of pulleys or rollers (3, 5), controlled by operation control handles allows automatically to unfold or to fold the covers with the purpose of covering the vehicles in a fast and simple way. A central cover (1) is coiled on itself by means of an axis (2), and the lateral covers (4) will be united to the main deck (1) at the time of the launching by means of zips (6) to unify the covers. The lateral extensions of the covers or canvases (4) are protected by wings (14) that are opened or closed to facilitate the unfolding or folding of these by means of mechanized hinges (13), but also provides of easy compact storage to the device. The canvas or main deck (1) is reinforced by metallic rods (8), that helps this weighted cover to maintain the structure adapted to cover the vehicle. The cover also has a security locking system to prevent theft.

## Description

This invention has several applications; it is a portable device to cover cars automatically. Besides protecting the bodies of the vehicles from rain, atmospheric dust, bird droppings, etc., it also adds an extra difficulty to car thieves. It also helps to cut down on environmental pollution by reducing the number of times the cars need washing.

This mechanism will replace the disadvantages that the conventional covers offer. Although these covers fulfil the basic objective to cover the vehicle, at the time of using them or to store them, they present a lot of inconveniences. A lot of physical effort is required to unfold or fold them, they are difficult to manoeuvre and they require a lot of space to store them. They are also difficult to transport.

The device " Portable Automatic Car Cover F.Q.1" is a detached-launchable car cover machine made up of three covers ( a central matrix, and two lateral ones ) that jointly with pulley systems are able to launch the covers over the car and embrace it as well as to pull them back automatically.

The main cover is reinforced by two lateral rods or link belts and one or two in the middle according to necessity that allows that the weighted covers or canvas are sent off straight, keeping the structure necessary to embrace the vehicle as well as being able to coil itself up at the time of pulling back. The two lateral covers are united to the main deck by a zip that allows them to close and unite at the time of being sent, or opened and separate at the time of pulling back. With which they accompany the movements of the central cover in drag way.

The main deck is directed by an axis with pulley mechanisms, connected to a motor that allows the cover to coil up on itself.

The lateral covers also have their own pulley's system, in addition to being directed by the movements of the central cover connected to the main motor that allows an identical spin to the central axis. And also serve as support to them.

The "Portable Automatic Car Cover F.Q.1" is made up of a main carcass of a light material with control operators and two wings with mechanized hinges that close and open to protect the outside of the two lateral covers, allowing them, due to the dimensions, to reduce the volume of the cover at the time of non-use.

The invention will now be described solely by way of example and with reference to the accompanying drawings in which:

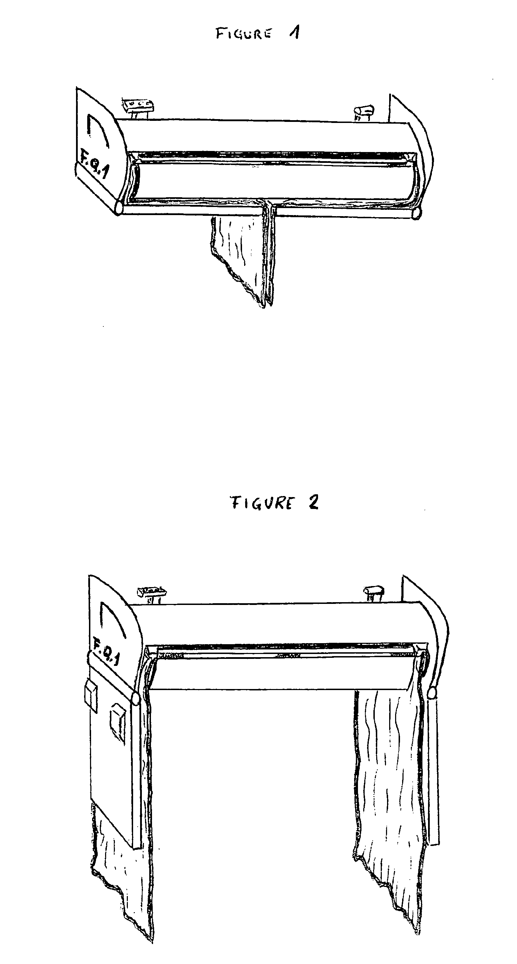

Figure 1 shows the invention as before or after being used.
Figure 2 shows "Portable Automatic Car Cover F.Q.1" with the open wings and ready to be launched over the vehicle.

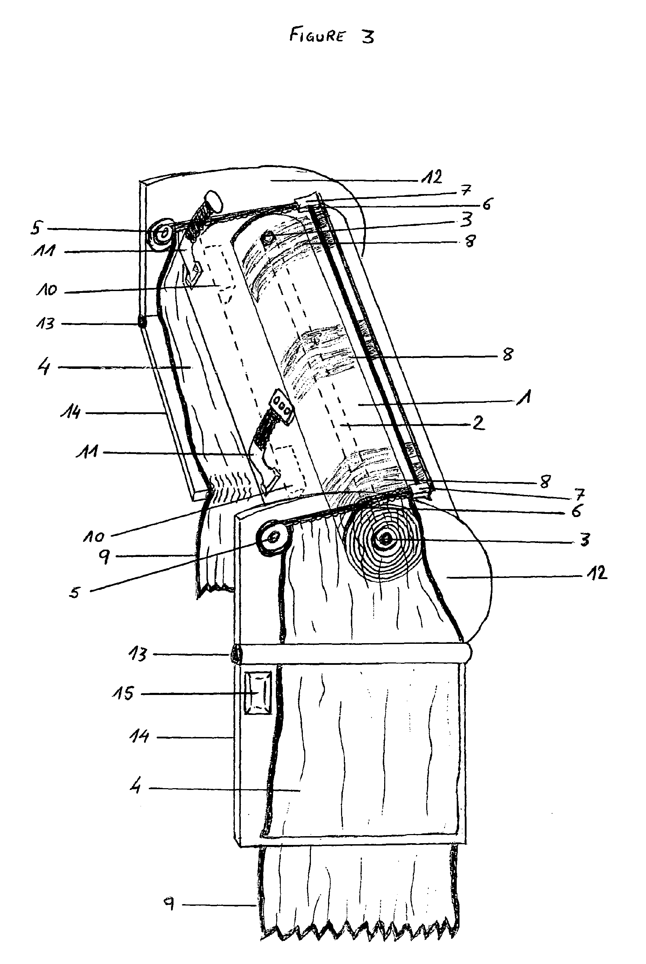

Figure 3 shows the internal and external components where you can see that that the main deck (1) is folded on a central axis (2), that with support of the mechanism of pulleys (3), allows the unfolding or retraction of the same. Upon the launch of the "Portable Automatic Car Cover F.Q.1", the lateral covers attached to the main deck will be dragged forward, using their own pulley system, to enable the complete embrace of the vehicle. In order to allow the union of the three covers, these are attached to zips (6) that will close or open when these pass through the attachment system (7). In addition, the main deck is reinforced and protected by belts or tapes (8), that allows that this remains straight when it is launching to maintain the structure necessary and facilitate the embrace of the vehicle.

The edges of the lateral covers in addition are reinforced by a cord (9) that with free movement within the edges and connected to the mechanism (5) it allows a recoiling movement to embrace the vehicle once these are in position. The pulleys mechanisms are powered by a motor (10), that responds to the control panel (11). The main body of the invention (12) is made by an ultra-light material to allow easy manoeuvrability of the device.

This carcass has two wings (14) adjoined to its body by motorized hinges (13). These wings open before launching and close after use for easy compact-storage. These wings are protected on their base by two rubber pads (15), which serve as legs when the product is on the ground. The device is provided with a locking system to protect it from non authorized users, as well as to add extra security to the vehicle.

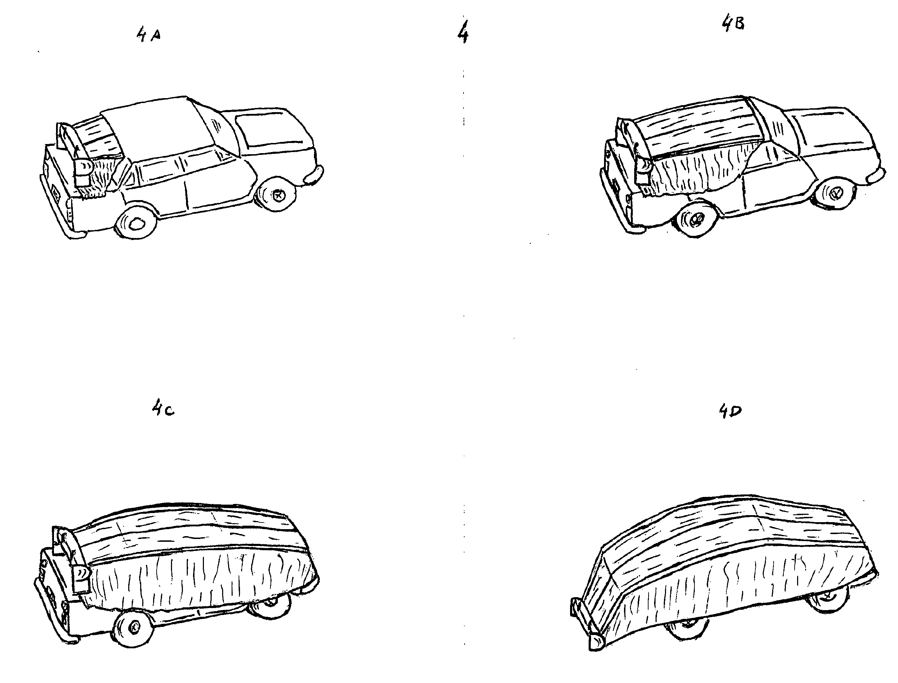

Figure 4 shows four stages of how the invention works.

## Claims

1. An independent, portable, launchable mechanical car cover with control installed in the handles for ease of use, where the cover is unfolded or folded by means of motors, comprising:
- A light manoeuvrable carcass with two handles containing control buttons which open the wings, launch the covers, retract the covers, aid the covers to embrace the vehicle and also to activate the security locking system.
- One central car cover coiled up in a central axis controlled by a motor.
- Two side covers held by pulleys systems that join the central cover by means of zips once these are activated.
- Two lateral wings that open and close mechanically with the purpose of protecting the side covers, but also to use to make the device more compact for storage.

2. An independent, portable, launchable mechanical car cover according with claim 1, with a system of mechanical pulleys sending or retracting three covers, a central matrix and two lateral ones.

3. An independent, portable, launchable mechanical car cover according with claim 1, where central axis mobilized by pulley's which sends or retracts on itself, and another system of lateral pulleys as well helps the movement of stretching or withdrawal of the other two lateral covers.

4. An independent, portable, launchable mechanical car cover according with claim 1, a device (7) placed inside the carcass near the covers exit provides the closure or opening of the zips (6), placed throughout the edges of the covers at the time of launching.

5. An independent, portable, launchable mechanical car cover according with claim 1, the central cover is reinforced by a series of rods or laminate bars, that allows that the weighted covers are provided by the rigidity and stability necessary to be unfolded with the suitable structure to embrace the vehicle.

6. An independent, portable, launchable mechanical car cover according with claim 1, is provided with two wings that close or open automatically to protect the lateral covers, but also to make the device more compact.

7. An independent, portable, launchable mechanical car cover according with claim 1, is provided with a locking system to block the operations of the mechanism to protect it from non authorized users, as well as to add extra security to the car.
